# EUROPEAN PATENT APPLICATION

(11) **EP 4 510 505 A1**
(43) Date of publication of application: **19.02.2025**
(21) Application number: 23891927.8
(22) Date of filing: 10.11.2023
(51) Int. Cl.: H04L 9/40, G06F 16/951, G06N 3/04

(54) **LINK CHARACTERISTIC ANALYSIS-BASED ABNORMAL WEB CONTENT DETECTION METHOD AND SYSTEM**

(30) Priority: 18.11.2022 KR 20220155254
(71) Applicant: POTATONET CO., LTD., Seoul 05029 (KR)
(72) Inventor: SHIN, Kyung Ah, Seoul 05029 (KR)
(74) Representative: Ponti & Partners, S.L.P
(86) International application number: PCT/KR2023/018079
(87) International publication number: WO 2024/106860

(57) **Abstract**

The present invention relates to a link characteristic analysis-based abnormal web content detection method and system for detecting and verifying a hidden malicious web address and visualizing web content by viewing a public content list and a hidden content list.

## Description

### TECHNICAL FIELD

The following example embodiments relate to technology for detecting a malicious web address for preventing cyberattacks, and more particularly, to a link characteristic analysis-based abnormal web content detection method and system for visualization of web content by detecting and verifying a hidden malicious web address and by referring to a public content list and a hidden content list.

### RELATED ART

In a software-centered society with the Fourth Industrial Revolution, that is, in a society in which all things are connected through a network, cyberattacks are becoming more intelligent and are becoming a source of profit for cybercrime organization.

A website accessed by a plurality of users is exploited by cybercrime and is transmitted through a website, an email, a short messaging service (SMS), and a social network service (SNS). Since it is difficult to determine whether a malicious web address is malicious based on an address alone, a user who clicks on a web address may be infected with malicious code or personal information or financial information of the user may be stolen. A web is a main method of distributing malicious code and it is reported that 85% of malicious code dissemination is through a website. Also, a web service is being abused as a command-and-control (C&C) server, a key delivery site for encryption, or an information leakage site to store stolen user information for malicious activities.

According to publishment from the UK's National Cyber Security Center (NCSC), the numbers of web addresses exploited for cyberattacks were 1.448 million in 2020 and 3.1 million in 2021 (https://www.ncsc.gov.uk/files/ACD-The-Fifth-Year-full-report.pdf, 2022). Malicious web address attacks more than doubled for one year between 2020 and 2021.

For cyberattacks, attackers hack a site and hide malicious content. There is a difficulty in finding this hidden content (or web address). Most existing malicious web address detection uses crawling of a user navigation method and a rule-based detection method. The user navigation method using a crawler traverses an internal link connected to a main page of a website and thus, may not detect hidden content without the internal link. The rule-based detection method uses a detected malicious web address as a detection rule and simply detects a harmless waypoint that is already detected and in which malignancy is removed. The waypoint refers to web content that has a link connected to malicious web content. A problem of the rule detection method is that change of even one letter of the existing rule makes detection impossible and an attacker may bypass rule detection by frequently changing a web address, and is that it is impossible to detect a new malicious web address not included in the rule and to detect a new malicious web address likely to appear in the future. Also, rule storage requires a large storage space and a rule comparison operation requires a large amount of resources and a long inspection time.

Antivirus or an email security tool may detect a malicious web address. However, detection using antivirus or the email security tool is a detection method limited to personal computers (PCs) and emails using the corresponding security tool and does not detect malicious web addresses of all websites. For a safe Internet environment, all websites need to be investigated to detect a malicious web address.

Web content is made public and accessible through a web service. However, a typical web content access method starts from a main page of a website and accesses the website through content connection.

That is, although it is present in a web directory, content access through a website is impossible without connection to a main page or another content connected to the main page. An attacker attacks the website and stores malicious content in the web directory and malicious content has no connection to the main page and thus, is inaccessible through a general website.

Such content having no connection to the main page is called hidden content. However, such hidden content is accessible if a storage path (uniform resource locator (URL)) of the web directory is known. Accordingly, the attacker attacks a user using a URL of malicious content that is not revealed through the website.

Korean Patent Registration No. 10-1428727 describes technology for a system and method for detecting a final distribution site and a waypoint of such malicious code.

### DETAILED DESCRIPTION

### SUBJECT

Example embodiments describe a link characteristic analysis-based abnormal web content detection method and system, and more particularly, provide technology for detecting a hidden malicious web address (distribution site) that distributes ransomware, etc., to prevent cyberattacks.

Example embodiments are based on the digital chain principle that normal web content is organically interconnected through a digital chain and abnormal web content is disconnected from the digital chain. Based on the digital chain principle, the example embodiments provide a link characteristic analysis-based abnormal web content detection method and system that may identify normal web content and abnormal web content using connection and disconnection states of internal and external links.

Here, the web content may represent a web address or a uniform resource locator (URL). In the following, although malicious code is used as an example of abnormal web content, it is an example only and not only malicious code but also phishing, an information leakage site, and a command-and-control (C&C) server may be included.

Example embodiments identify attack damage to a website and protect the website from being abused through visualization of web content and web access control of hidden content to respond to a malicious content attack having a hidden characteristic due to hyperlink property of a web.

However, technical subjects to be solved by the present invention is not limited to the aforementioned subjects and may be variously expanded without departing from the technical spirit and scope of the present invention.

### SOLUTION

A link characteristic analysis-based abnormal web content detection method performed by a computer device according to an example embodiment of the present invention includes collecting information by traversing internal and external links of a website using a crawler; identifying normal or abnormal web content using a connection or disconnection state of the internal and external links based on the collected information; and inspecting a request or a response of the normal or abnormal web content using a listed public content list and hidden content list, and the identifying of the normal or abnormal web content includes identifying the normal or abnormal web content using the digital chain principle that, in a website, normal web content forms an organically interconnected structure through a digital chain and abnormal web content forms a structure in which the digital chain is disconnected.

A link characteristic analysis-based abnormal web content detection method according to an example embodiment includes collecting information by traversing internal and external links of a website using a crawler; and identifying normal or abnormal web content using a connection or disconnection state of the internal and external links based on the collected information, and the identifying of the normal or abnormal web content includes identifying the normal or abnormal web content using the digital chain principle that, in a website, normal web content forms an organically interconnected structure through a digital chain and abnormal web content forms a structure in which the digital chain is disconnected.

### EFFECT

According to some example embodiments, there may be provided a link characteristic analysis-based abnormal web content detection method and system that may identify normal web content and abnormal web content using connection and disconnection states of internal and external links, based on the digital chain principle that normal web content is organically interconnected through a digital chain and abnormal web content is disconnected from the digital chain.

Example embodiments collect web content information of a link and the like using a user navigation method. However, malignancy search (identification) identifies malignancy through an external link rather than using the user navigation method that follows an internal link. If web content of the external link is disconnected from content inside a domain, the web content is determined as abnormal content. A hidden status and a malicious status of abnormal content disconnected from a link may be sophisticatedly determined through additional validation. An abnormal content detection method may detect active malicious web content. Using a non-rule-based detection method, it is impossible for an attacker to bypass rule detection, and it is possible to detect a new malicious web address that has not been detected and to detect a new malicious web address that may appear in the future. Also, it is possible to solve issues, such as resource consumption and a long inspection time for rule detection.

Example embodiments relate to a method of detecting a malicious web address by inspecting all websites for a safe Internet environment.

According to example embodiments, it is possible to identify attack damage to a website and to protect the website from being abused through visualization of web content and web access control of hidden content to respond to a malicious content attack having a hidden characteristic due to hyperlink property of a web.

However, the effect of the present invention is not limited to the aforementioned effect and may be variously expanded without departing from the technical spirit and scope of the present invention.

### BRIEF DESCRIPTION OF DRAWINGS

FIG. 1A is a diagram for describing detection of hidden malicious web content according to the related art, and FIG. 1B is a diagram for describing detection of hidden malicious web content according to an example embodiment.
FIG. 2 is a block diagram illustrating an example of an internal configuration of a computer system according to an example embodiment.
FIG. 3 is a block diagram illustrating components in includable in a processor of a computer system according to an example embodiment.
FIG. 4 is a flowchart illustrating an abnormal web content detection method performed by a computer system according to an example embodiment.
FIG. 5 is a block diagram illustrating components includable in a processor of a computer system according to an example embodiment.
FIG. 6 is a flowchart illustrating an abnormal web content detection method performed by a computer system according to an example embodiment.
FIG. 7 is a diagram for describing a process of identifying web content and processing a web content management list according to an example embodiment.
FIG. 8 is a diagram for describing a hidden content web access control method according to an example embodiment.
FIG. 9 is a diagram for describing a hidden content web access control method based on a web request according to an example embodiment.
FIG. 10 is a diagram for describing a hidden content web access control method based on a response to web request according to an example embodiment.
FIG. 11 is a diagram for describing a structure of a link characteristic analysis-based abnormal web content detection system according to an example embodiment.
FIG. 12 is a configuration diagram of a link characteristic analysis-based abnormal web content detection system according to an example embodiment.

### BEST MODE

Advantages and features of the present invention and methods of achieving the same will become clear with reference to example embodiments described in detail with the accompanying drawings. However, the present invention is not construed as being limited to the example embodiments disclosed below and will be implemented in various forms different from each other. The example embodiments are provided to make the disclosure of the present invention complete and to inform the scope of the present invention to one of ordinary skill in the art to which the present invention pertains and the present invention is only defined by the scope of the claims.

The terminology used herein is for the purpose of describing the example embodiments only and is not to be limiting the present invention. As used herein, the singular forms "a," "an," and "the" are intended to include the plural forms as well, unless the context clearly indicates otherwise. It will be further understood that the terms "comprises" and/or "comprising," when used in this specification, specify the presence of stated components steps, operations, and/or elements, but do not preclude the presence or addition of one or more other components, steps, operations, and/or elements.

Unless otherwise defined herein, all terms used herein (including technical or scientific terms) have the same meanings as those generally understood by one of ordinary skill in the art. Also, terms defined in dictionaries generally used should be construed to have meanings matching contextual meanings in the related art and are not to be construed as an ideal or excessively formal meaning unless otherwise defined herein.

Hereinafter, example embodiments of the present invention will be described in detail with reference to the accompanying drawings. Like reference numerals refer to like components throughout and repeated description related thereto will be omitted.

The present invention is to detect and verify a hidden malicious web address and to refer to a public content list and a hidden content list for visualization of web content.

Here, the web content may represent a web address or a uniform resource locator (URL). **In** the following, although malicious code is used as an example of abnormal web content, it is an example only and not only malicious code but also phishing, information leakage site, and a command-and-control (C&C) server may be included.

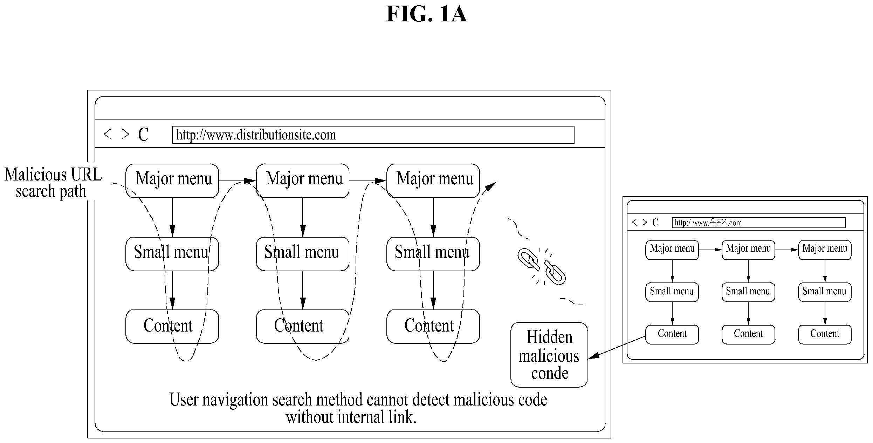

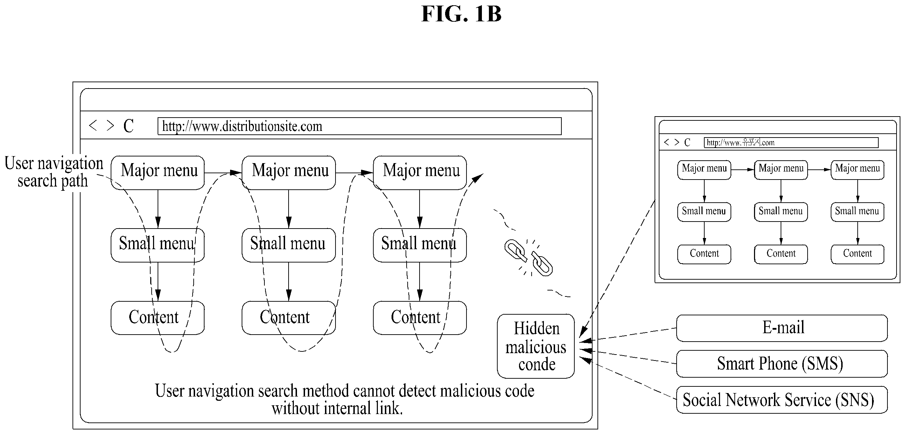

Hereinafter, the present invention is described with reference to FIGS. 1 to 12.

FIG. 1A is a diagram for describing detection of hidden malicious web content according to the related art.

Referring to FIG. 1A, with a web search method using the conventional user navigation search method, it is impossible to detect a website that distributes hidden malicious code. Also, with the conventional distribution site rule-based malicious code detection method, it is difficult to detect a distribution site of new malicious code and cost and time are being wasted due to detection of a harmless waypoint in which malicious code has disappeared. Here, the distribution site refers to a web address in which the malicious code is present and the waypoint refers to a web address having a link to the distribution site.

As such, the conventional user navigation search method may not detect hidden malicious code without an internal link. Here, user navigation refers to a user search method and a method of exploring web content by following internal links in a major menu and a small menu.

FIG. 1B is a diagram for describing detection of hidden malicious web content according to an example embodiment.

Referring to FIG. 1B, example embodiments relate to a method of traversing internal links, which breaks away from a conventional method of not detecting a hidden distribution site, and may detect an active harmful distribution site in which malicious code is present and a waypoint connected to the harmful distribution site, based on the digital chain principle.

Here, the digital chain principle is as follows. Normal web content is organically interconnected through a digital chain, but abnormal web content is disconnected from the digital chain. Here, web content may represent a web address or a URL. In the following, although malicious code is used as an example of abnormal web content, it is an example only and not only malicious code but also phishing, an information leakage site, and a command-and-control (C&C) server may be included.

According to example embodiments, provided is a search method that combines user navigation and artificial intelligence (AI) technology and, through this, it is possible to detect malicious code by exploring internal and external links.

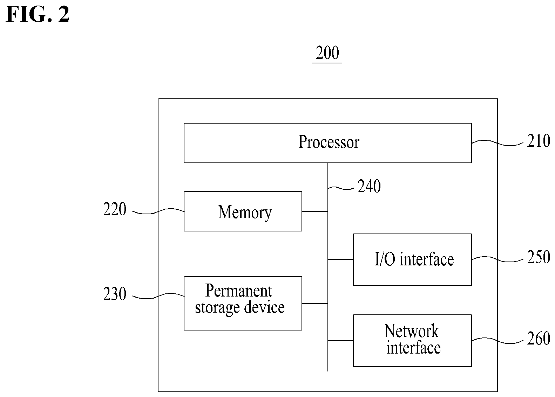

FIG. 2 is a block diagram illustrating an example of an internal configuration of a computer system according to an example embodiment. For example, an abnormal web content detection system according to example embodiments of the present invention may be implemented through a computer system 200 of FIG. 2. As shown in FIG. 2, the computer system 200 may include a processor 210, a memory 220, a permanent storage device 230, a bus 240, an input/output (I/O) interface 250, and a network interface 260 as components for executing an abnormal web content detection method.

The processor 210 may include any device capable of processing an arbitrary sequence of instructions or a portion thereof. The processor 210 may include, for example, a computer processor, a processor and/or a digital processor in a mobile device or another electronic device. The processor 210 may be included in, for example, a server computing device, a server computer, a series of server computers, a server farm, a cloud computer, a content platform, a mobile computing device, a smartphone, a tablet, a set-top box, and a media player. The processor 210 may be connected to the memory 220 through the bus 240.

The memory 220 may include a volatile memory, a permanent memory, a virtual memory, or other memories to store information used by or output from the computer system 200. The memory 220 may include, for example, random access memory (RAM) and/or dynamic RAM (DRAM). The memory 220 may be used to store arbitrary information, such as state information of the computer system 200. The memory 220 may be used to store, for example, instructions of the computer system 200 that includes instructions for abnormal web content detection. If necessary or in an appropriate case, the computer system 200 may include at least one processor 210.

The bus 240 may include a communication-based structure that enables interaction between various components of the computer system 200. The bus 240 may convey data, for example, between components of the computer system 200, for example, between the processor 210 and the memory 220. The bus 240 may include a wireless and/or wired communication medium between the components of the computer system 200 and may include parallel, series, or other topology arrangements.

The permanent storage device 230 may include components, such as a memory or other permanent storage devices as used by the computer system 200, to store data during a predetermined extended period (e.g., compared to the memory 220). The permanent storage device 230 may include a nonvolatile main memory as used by the processor 210 within the computer system 200. The permanent storage device 230 may include, for example, a flash memory, a hard disc, an optical disc, or other computer-readable recording media.

The I/O interface 250 may include interfaces for a keyboard, a mouse, a voice instruction input, a display, or other input device or output device. Configuration instructions and/or abnormal web content detection related data may be received through the I/O interface 250.

The network interface 260 may include at least one interface for networks, such as a local area network or the Internet. The network interface 260 may include interfaces for wired or wireless connections. The configuration instructions and/or abnormal web content detection related data may be received through the network interface 260.

Also, in other example embodiments, the computer system 200 may include more components than the number of components of FIG. 2.

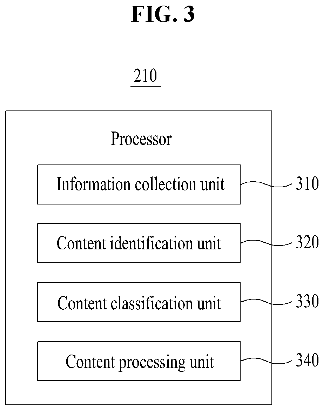

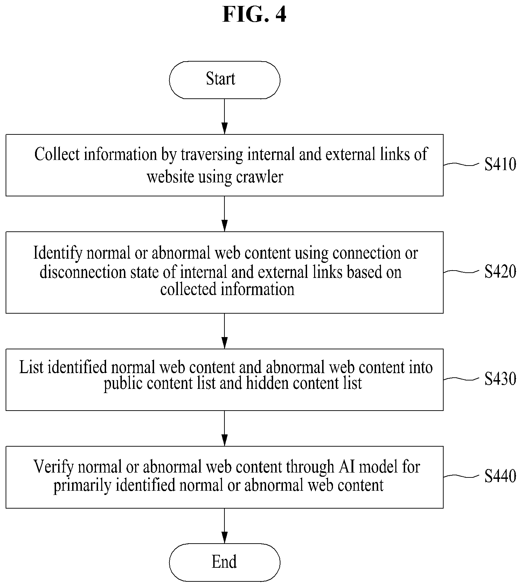

FIG. 3 is a block diagram illustrating components in includable in a processor of a computer system according to an example embodiment, and FIG. 4 is a flowchart illustrating an abnormal web content detection method performed by a computer system according to an example embodiment.

Referring to FIG. 3, the processor 210 may include an information collection unit 310, a content identification unit 320, a content classification unit 330, and a content processing unit 340. Here, the processor 210 may be referred to as an abnormal web content detection system. The components of the processor 210 may be expressions of different functions performed by the processor 210 in response to a control instruction provided from at least one program code. For example, the information collection unit 310 may be used as a functional expression for controlling the computer system 200 such that the processor 210 collects information while traversing internal and external links of a website using a crawler. The processor 210 and the components of the processor 210 may perform operations S410 to S440 included in the abnormal web content detection method of FIG. 4. For example, the processor 210 and the components of the processor 210 may be implemented to execute an instruction in response to a code of an OS included in the memory 220 and the aforementioned at least one program code. Here, the at least one program code may correspond to a program code implemented to process the abnormal web content detection method.

A link characteristic analysis-based abnormal web content detection method performed by a computer device according to an example embodiment may include operation S410 of collecting information by traversing internal and external links of a website using a crawler, operation S420 of identifying normal or abnormal web content using a connection or disconnection state of the internal and external links based on the collected information, and operation S430 of listing the identified normal web content and abnormal web content into a public content list and a hidden content list, and may further include operation S440 of verifying the normal or abnormal web content through an AI model for the primarily identified normal or abnormal web content.

The abnormal web content detection method may not be performed in illustrated order and a portion of operations may be omitted or an additional process may be further included.

In operation S410, the information collection unit 310 may collect information by traversing the internal and external links of the website using the crawler. In more detail, in response to a validation request domain transmitted to a crawler server, the information collection unit 310 may collect the information by traversing internal and external links of the validation request domain using the crawler. Here, the information collection unit 310 may configure the crawler server in a distributed form for real-time crawling of the crawler.

Here, the crawler may crawl domestic and foreign domains/threat domains and may detect a hidden distribution site (URL) by traversing internal and external links. Here, the crawler may primarily identify a suspicious URL using only a link.

**In** operation S420, the content identification unit 320 may identify the normal or abnormal web content using the connection or disconnection state of the internal and external links based on the collected information. **In** more detail, the content identification unit 320 may identify the normal or abnormal web content using the connection or disconnection state of the internal and external links based on the information collected by the crawler server and then may transmit suspicious URL data.

The content identification unit 320 may identify the normal or abnormal web content using the digital chain principle that, in a website, the normal web content forms an organically interconnected structure through a digital chain and the abnormal web content forms a structure in which the digital chain is disconnected.

**In** operation S430, the content classification unit 330 may inspect a request or a response of the normal or abnormal web content using a listed public content list and hidden content list. **In** more detail, the content classification unit 330 may inspect the request or the response of web content using the public content list and the hidden content list through classification, may detect whether the corresponding request or response relates to the hidden content, and may classify the web content into public content or hidden content.

**In** operation S440, the content processing unit 340 may verify the normal or abnormal web content through the AI model for the primarily identified normal or abnormal web content. Also, the content processing unit 340 may block access to and execution of the hidden content. In more detail, the content processing unit 340 may verify, using an AI server, the normal or abnormal web content through the AI model and then transmit results to a web database to store decision results. Here, crawling metadata and/or domain information may be performed prior to verifying. That is, domain related meta information of a suspicious domain may be crawled and collected before AI detection.

Also, when the content classification unit 330 classifies the corresponding web content into the hidden content, the content processing unit 340 may control the request or the response of the corresponding content to block access to and execution of the hidden content. In more detail, when the request or the response of the web content is present, the content classification unit 330 may inspect the same to refer to the public content list and to detect that the request or the response of the corresponding content relates to the hidden content. In the case of the hidden content, the content processing unit 340 may control the request or the response of the corresponding content to block access to and execution of the hidden content.

Here, the AI model may select a search domain and may collect and refine threat data. Also, the AI model may configure a multi-modal composite model and may detect a distribution site.

The content processing unit 340 may verify the normal or abnormal web content through bigdata characteristic-based AI detection for a distribution site and a waypoint of the malicious code. Specifically, the content processing unit 340 may detect a URL that distributes malicious code by simultaneously detecting a distribution site and a waypoint in which the malicious code is alive, using a non-rule-based detection method.

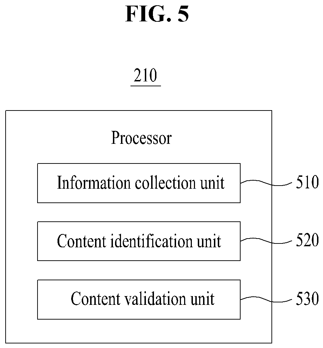

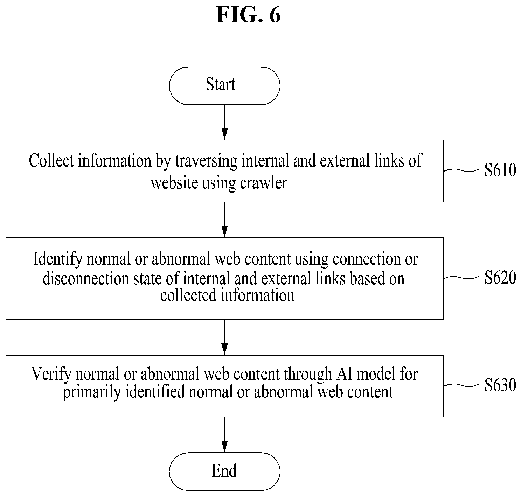

FIG. 5 is a block diagram illustrating components includable in a processor of a computer system according to an example embodiment, and FIG. 6 is a flowchart illustrating an abnormal web content detection method performed by a computer system according to an example embodiment.

Referring to FIG. 5, the processor 210 may include an information collection unit 510, a content identification unit 520, and a content validation unit 530. Here, the processor 210 may be referred to as an abnormal web content detection system. The components of the processor 210 may be expressions of different functions performed by the processor 210 according to a control instruction provided in response to at least one program code. For example, the information collection unit 510 may be used as a functional expression for controlling the computer system 200 such that the processor 210 collects information while traversing internal and external links of a website using a crawler. The processor 210 and the components of the processor 210 may perform operations S610 to S630 included in the abnormal web content detection method of FIG. 6. For example, the processor 210 and the components of the processor 210 may be implemented to execute an instruction in response to a code of an OS included in the memory 220 and the aforementioned at least one program code. Here, the at least one program code may correspond to a program code implemented to process the abnormal web content detection method.

The link characteristic analysis-based abnormal web content detection method performed by a computer device according to an example embodiment may include operation S610 of collecting information by traversing internal and external links of a website using a crawler and operation S620 of identifying normal or abnormal web content using a connection or disconnection state of the internal and external links based on the collected information, and may further include operation S630 of verifying the normal or abnormal web content through an AI model for the primarily identified normal or abnormal web content.

The abnormal web content detection method may not be performed in illustrated order and a portion of operations may be omitted or an additional process may be further included.

In operation S610, the information collection unit 510 may collect information by traversing the internal and external links of the website using the crawler. In more detail, in response to a validation request domain transmitted to the crawler server, the information collection unit 510 may collect the information by traversing internal and external links of the validation request domain using the crawler. Here, the information collection unit 510 may configure the crawler server in a distributed form for real-time crawling of the crawler.

Here, the crawler may crawl domestic and foreign domains/threat domains and may detect a hidden distribution site (URL) by traversing internal and external links. Here, the crawler may primarily identify a suspicious URL using only a link.

In operation S620, the content identification unit 520 may identify the normal or abnormal web content using the connection or disconnection state of the internal and external links based on the collected information. In more detail, the content identification unit 520 may identify the normal or abnormal web content using the connection or disconnection state of the internal and external links based on the information collected by the crawler server and then may transmit suspicious URL data.

The content identification unit 520 may identify the normal or abnormal web content using the digital chain principle that, in a website, the normal web content forms an organically interconnected structure through a digital chain and the abnormal web content forms a structure in which the digital chain is disconnected.

In operation S630, the content validation unit 530 may verify the normal or abnormal web content through the AI model for the primarily identified normal or abnormal web content. In more detail, the content validation unit 530 may verify, using an AI server, the normal or abnormal web content through the AI model and then transmit results to a web database to store decision results. Here, crawling metadata and/or domain information may be performed prior to verifying. That is, domain related meta information of a suspicious domain may be crawled and collected before AI detection.

Here, the AI model may select a search domain and may collect and refine threat data. Also, the AI model may configure a multi-modal composite model and may detect a distribution site.

The content validation unit 530 may verify the normal or abnormal web content through bigdata characteristic-based AI detection for a distribution site and a waypoint of the malicious code. Specifically, the content validation unit 530 may detect a URL that distributes malicious code by simultaneously detecting a distribution site and a waypoint in which the malicious code is alive, using a non-rule-based detection method.

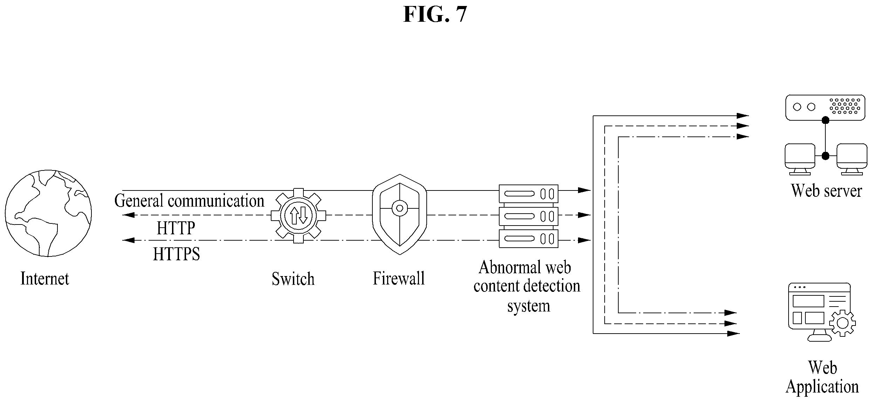

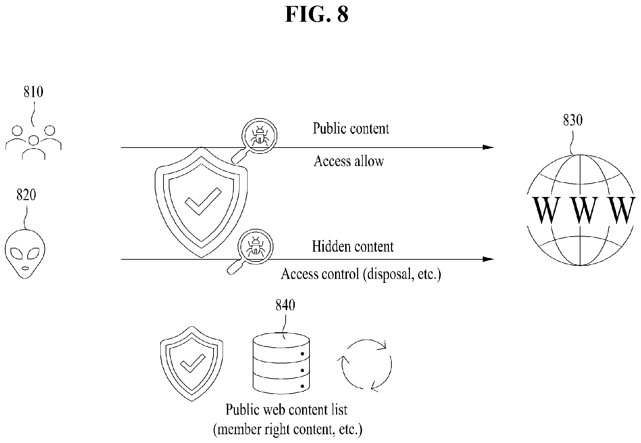

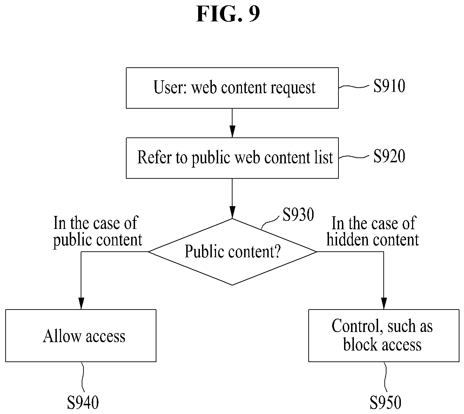

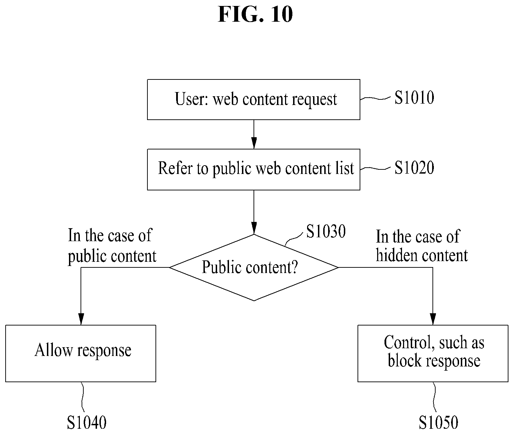

FIG. 7 is a diagram for describing a process of identifying web content and processing a web content management list according to an example embodiment. FIG. 8 is a diagram for describing a hidden content web access control method according to an example embodiment, FIG. 9 is a diagram for describing a hidden content web access control method based on a web request according to an example embodiment, and FIG. 10 is a diagram for describing a hidden content web access control method based on a response to web request according to an example embodiment.

Referring to FIGS. 7 and 8, a link characteristic analysis-based abnormal web content detection system according to an example embodiment generates a public content list and a hidden content list for visualization of web content along an internal link while traversing a website and periodically updates the public content list (member right content, etc.) and the hidden content list.

The link characteristic analysis-based abnormal web content detection system according to an example embodiment generates a public web content list 840 by crawling web content along hyperlink (website internal link) in a website 830. The hyperlink may include a web content list connected according to a mouse event, such as onClick().

Also, content accessible through login is regarded as public content. Here, hidden content represents content without an internal link. This may represent content that disallows a user 810 to access along a link based on a main page and may represent content hidden by an attacker 820 or content erroneously stored in a web directory by a developer or an administrator.

A hidden content list is generated outside a web server.

When corresponding content is not public content by inspecting request or response received from outside of the webserver in a web service, the corresponding content may be considered as hidden content, not the public content, and the hidden content list may be generated. Here, the link characteristic analysis-based abnormal web content detection system according to an example embodiment may inspect web content request or response to the request and may identify hidden content based on a visualized web content list and may control access to the hidden content, using a web access control method.

**In** more detail, describing the web access control method with reference to FIGS. 9 and 10, the link characteristic analysis-based abnormal web content detection system according to an example embodiment identifies public web content by crawling content of a web service and stores a web content management list (public content list and hidden content list) before operations S910 and S1010. Here, for smooth web service processing, when corresponding web content is verified to be in a hidden state with a disconnected link or normal web content, access and execution may be allowed and the corresponding web content may be stored in the web content management list.

Subsequently, the link characteristic analysis-based abnormal web content detection system according to an example embodiment refers to a public content list in response to a web content request received in the web service in operation S910 (operation S920), and compares whether the web content is public content or hidden content (operation S930). Therefore, the link characteristic analysis-based abnormal web content detection system allows access in the case of public normal content (operation S940), and blocks and controls access in the case of hidden abnormal content to block access to and execution of the hidden abnormal content (operation S950).

Also, the link characteristic analysis-based abnormal web content detection system according to an example embodiment refers to a public content list of web content that responds to a request received in a web service in operation S1010 (operation S1020), and compares whether the corresponding content is hidden content (operation S1030). Accordingly, the link characteristic analysis-based abnormal web content detection system allows request (response) in the case of public (operation S1040), and blocks and controls the request (response) in the case of hidden abnormal content to block access to and execution of the hidden abnormal content (operation S1050).

The link characteristic analysis-based abnormal web content detection system according to an example embodiment may transmit a notification to a web administrator for hidden abnormal content in the case of the hidden abnormal content. Also, the link characteristic analysis-based abnormal web content detection system stores and updates the hidden abnormal content in the web content management list, and stores request (response) and control details of the hidden abnormal content in a log.

The link characteristic analysis-based abnormal web content detection system according to an example embodiment may detect malicious content, such as web shell, and respond thereto through visualization of web content and web access control of hidden content by employing methods of 1) detecting whether an attacker has hidden malicious content, such as malicious code, in a web server, 2) detecting whether the attacker executes hidden web shell malicious code to intrude a company through a web service, 3) detecting and blocking a hidden content-based web shell execution request, and 4) detecting web shell by installing outside a website.

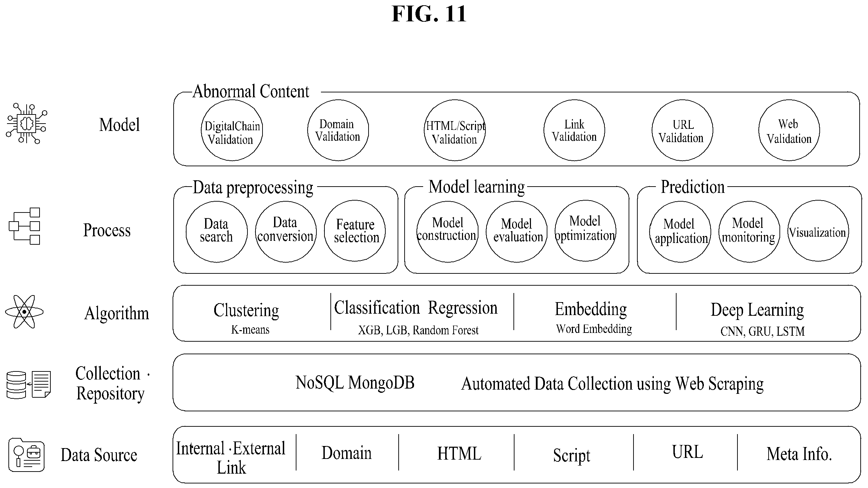

FIG. 11 is a diagram for describing a structure of a link characteristic analysis-based abnormal web content detection system according to an example embodiment.

Referring to FIG. 11, a link characteristic analysis-based abnormal web content detection system according to an example embodiment may detect a web address of malicious code through the digital chain principle and a bigdata-based AI model. Example embodiments relate to AI technology for verifying malignancy for web content primarily identified based on the digital chain principle.

An AI model for verifying malicious web content is as shown in FIG. 11.

Internal/external links and URL information, domain information, meta information of content, script, and HTML are used for a data source. Collected data is stored in MongoDB, which is a no SQL server, for bigdata processing.

Classification/regression algorithms, clustering algorithm, and deep learning are used for model generation. A model processing process goes through a data analysis and data conversion, and feature selection process, and model construction, model evaluation, and model optimization are performed for model learning. In a model prediction and analysis process, model analysis and model monitoring and visualization of prediction results are performed.

Through data collection and model generation, six types of single models and composite model are generated, and a digital chain validation model and a link validation model, a URL model, a domain model, an HTML, and a script model are generated.

The digital chain principle states that, in a digital service, data has an organically interconnected structure, but abnormal web content has a structure in which the digital chain is disconnected. In more detail, normal web content has a structure that is organically interconnected through the digital chain, abnormal content (i.e., distribution site) has a structure in which the digital chain is disconnected, without an internal link, which differs from the normal web content. Accordingly, example embodiments may identify normal web content and abnormal web content using connection and disconnection states of internal and external links.

Also, the bigdata-based AI model may find features of an abnormal URL and a normal URL based on bigdata and may perform automatic AI-based detection.

The link characteristic analysis-based abnormal web content detection system according to an example embodiment may include a web crawler configured to explore internal and external URLs, and may perform digital chain-based URL search and abnormal validation, and may provide a web service that detects an abnormal URL through an AI model configured to determine an abnormal status based on collected crawler information and verifies whether the URL is abnormal. Here, data may be divided into normal, a waypoint, and a distribution site.

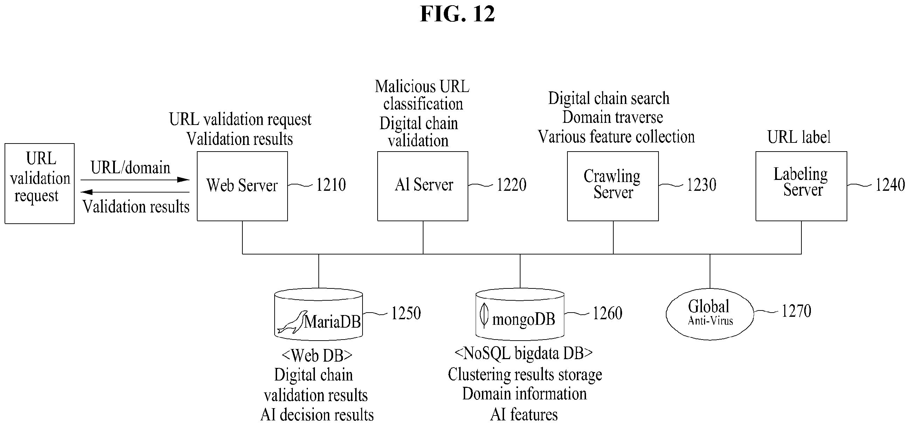

FIG. 12 is a configuration diagram of a link characteristic analysis-based abnormal web content detection system according to an example embodiment.

Referring to FIG. 12, a link characteristic analysis-based abnormal web content detection system according to an example embodiment may deliver a URL validation request to a web server 1210. The web server 1210 may receive the URL validation request and may deliver validation results again after validation is completed. Here, validation may proceed through an AI server 1220 and a crawling server 1230, and the web server 1210 may receive the validation results after validation from the AI server 1220 and the crawling server 1230.

The crawling server 1230 may collect various features by exploring a digital chain and by traversing a domain. Also, the AI server 1220 may classify an abnormal web URL and may verify the digital chain. In addition, a labeling server 1240 may display a URL label. Here, a web database 1250 may store digital chain validation results and AI decision results, and a bigdata database 1260 may store crawling results and may store domain information and AI features. Also, data may be secured in real time and validation technology may be exchanged in linkage with a global threat intelligence company 1270.

Example embodiments may simultaneously detect a distribution site and a waypoint in which malicious code is alive using a non-rule-based detection method. Therefore, a URL that spreads malicious code may be detected.

To this end, example embodiments may secure learning data. For example, the example embodiments may secure the learning data through self-collected abnormal URL data and exchange of real-time data acquisition and validation technology in association with global threat intelligence company.

Also, example embodiments may develop and refine sub-technology that may improve detection performance of a digital chain artificial intelligence (AI) model. For example, the example embodiments may establish a domain selection criterion and may improve normal/abnormal identification performance using various features.

As described above, compared to the existing art, the example embodiments do not use a URL search method for detecting a URL that distributes malicious code, a validation method for distributing malicious code, and a distribution site rule.

Since the conventional method of detecting a URL that distributes malicious code uses a method that allows a crawler to traverse only an internal link using a user navigation method, it is impossible to detect a hidden distribution site.

The conventional validation method of distributing malicious code uses HTML source validation and download file (exe) validation, which requires a long validation time, and overload occurs due to full investigation of source code inside a webpage, such as excessive resource occupancy and an increase in time required. Also, it is impossible to verify obfuscated source code.

The conventional method of using a distribution site rule detects a harmless waypoint based on a harmless distribution site rule. Therefore, it is impossible to detect a new distribution site and to detect a URL that distributes malicious code.

Example embodiments may detect a hidden distribution site, that is, a URL that distributes malicious code by traversing not only an internal link but also an external link through a crawler using the digital chain principle and the user navigation method.

A validation method of distributing malicious code according to example embodiment enables quick validation by applying the digital chain theory and may significantly reduce the number of validation targets by primarily filtering a suspicious abnormal URL. Also, example embodiments have a fast validation speed through AI detection based on various bigdata characteristics of distribution sites and waypoints.

The systems or the apparatuses described herein may be implemented using hardware components, software components, and/or combinations thereof. For example, the apparatuses and the components described herein may be implemented using one or more general-purpose or special purpose computers, such as, for example, a processor, a controller, an arithmetic logic unit (ALU), a digital signal processor, a microcomputer, a field programmable gate array (FPGA), a programmable logic unit (PLU), a microprocessor, or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will be appreciated that a processing device may include multiple processing elements and/or multiple types of processing elements. For example, a processing device may include multiple processors or a processor and a controller. In addition, different processing configurations are possible, such as parallel processors.

The software may include a computer program, a piece of code, an instruction, or some combinations thereof, for independently or collectively instructing or configuring the processing device to operate as desired. Software and/or data may be permanently or temporarily embodied in any type of machine, component, physical equipment, virtual equipment, a computer storage medium or device, or a signal wave to be transmitted, to be interpreted by the processing device or to provide an instruction or data to the processing device. The software also may be distributed over network coupled computer systems so that the software is stored and executed in a distributed fashion. The software and data may be stored by one or more computer readable storage media.

The methods according to the example embodiments may be configured in a form of program instructions performed through various computer devices and recorded in computer-readable media. The media may also include, alone or in combination with the program instructions, data files, data structures, and the like. The program instructions recorded in the media may be specially designed and configured for the example embodiments or may be known to those skilled in the computer software art and thereby available. Examples of the media include magnetic media such as hard disks, floppy disks, and magnetic tapes; optical media such as CD-ROM and DVDs; magneto-optical media such as floptical disks; and hardware devices that are specially configured to store program instructions, such as read-only memory (ROM), random access memory (RAM), flash memory, and the like. Examples of program instructions include both machine code, such as produced by a compiler, and files containing higher level code that may be executed by the computer using an interpreter. The hardware device may be configured to operate as at least one software module, or vice versa.

### MODE

While the example embodiments are described with reference to specific example embodiments and drawings, it will be apparent to one of ordinary skill in the art that various alterations and modifications in form and details may be made in these example embodiments without departing from the spirit and scope of the claims and their equivalents. For example, suitable results may be achieved if the described techniques are performed in a different order, and/or if components in a described system, architecture, device, or circuit are combined in a different manner, or replaced or supplemented by other components or their equivalents.

Therefore, other implementations, other example embodiments, and equivalents of the claims are to be construed as being included in the claims.

## Claims

1. A link characteristic analysis-based abnormal web content detection method performed by a computer device, the abnormal web content detection method comprising:
collecting information by traversing internal and external links of a website using a crawler;
identifying normal or abnormal web content using a connection or disconnection state of the internal and external links based on the collected information; and
inspecting a request or a response of the normal or abnormal web content using a listed public content list and hidden content list,
wherein the identifying of the normal or abnormal web content comprises identifying the normal or abnormal web content using the digital chain principle that, in a website, normal web content forms an organically interconnected structure through a digital chain and abnormal web content forms a structure in which the digital chain is disconnected.

2. The abnormal web content detection method of claim 1, further comprising:
verifying the normal or abnormal web content through an artificial intelligence (AI) model for the primarily identified normal or abnormal web content.

3. The abnormal web content detection method of claim 2, wherein the verifying comprises referring to a request or a response of web content using the public content list and the hidden content list, detecting whether the corresponding request or response relates to hidden content, and classifying the web content into public content or the hidden content.

4. The abnormal web content detection method of claim 3, wherein the verifying comprises controlling the corresponding request or response to block access to and execution of the hidden content in the case of the hidden content.

5. The abnormal web content detection method of claim 1, wherein the abnormal web content detection method manages the public content list and the hidden content list outside a web server and verifies the hidden content based on a list managed outside the web server.

6. The abnormal web content detection method of claim 1, wherein the collecting comprises, in response to a validation request domain transmitted to a crawler server, collecting the information by traversing internal and external links of the validation request domain using the crawler.

7. The abnormal web content detection method of claim 6, wherein the identifying comprises primarily identifying the normal or abnormal web content using the connection or disconnection state of the internal and external links based on the information collected by the crawler server and then transmitting suspicious uniform resource locator (URL) data.

8. The abnormal web content detection method of claim 1, wherein the collecting comprises configuring a crawler server in a distributed form for real-time crawling of the crawler.

9. The abnormal web content detection method of claim 2, wherein the verifying comprises verifying the normal or abnormal web content through bigdata characteristic-based AI detection for a distribution site and a waypoint of malicious code.

10. The abnormal web content detection method of claim 2, wherein the verifying comprises detecting a URL that distributes malicious code by simultaneously detecting a distribution site and a waypoint in which the malicious code is alive, using a non-rule-based detection method.

11. The abnormal web content detection method of claim 2, wherein the verifying comprises verifying, by an AI server, the normal or abnormal web content through the AI model and then transmitting results to a web database to store decision results.

12. A link characteristic analysis-based abnormal web content detection method performed by a computer device, the abnormal web content detection method comprising:
collecting information by traversing internal and external links of a website using a crawler; and
identifying normal or abnormal web content using a connection or disconnection state of the internal and external links based on the collected information,
wherein the identifying of the normal or abnormal web content comprises identifying the normal or abnormal web content using the digital chain principle that, in a website, normal web content forms an organically interconnected structure through a digital chain and abnormal web content forms a structure in which the digital chain is disconnected.

13. The abnormal web content detection method of claim 12, further comprising:
verifying the normal or abnormal web content through an artificial intelligence (AI) model for the primarily identified normal or abnormal web content.

14. The abnormal web content detection method of claim 12, wherein the collecting of the information by traversing the internal and external links comprises, in response to a validation request domain transmitted to a crawler server, collecting the information by traversing internal and external links of the validation request domain using the crawler.

15. The abnormal web content detection method of claim 14, wherein the identifying of the normal or abnormal web content comprises primarily identifying the normal or abnormal web content using the connection or disconnection state of the internal and external links based on the information collected by the crawler server and then transmitting suspicious inform resource locator (URL) data.

16. The abnormal web content detection method of claim 12, wherein the collecting of the information by traversing the internal and external links comprises a crawler server in a distributed form for real-time crawling of the crawler.

17. The abnormal web content detection method of claim 13, wherein the verifying of the normal or abnormal web content through the AI model comprises verifying the normal or abnormal web content through bigdata characteristic-based AI detection for a distribution site and a waypoint of malicious code.

18. The abnormal web content detection method of claim 13, wherein the verifying of the normal or abnormal web content through the AI model comprises detecting a URL that distributes malicious code by simultaneously detecting a distribution site and a waypoint in which the malicious code is alive, using a non-rule-based detection method.

19. The abnormal web content detection method of claim 13, wherein the verifying of the normal or abnormal web content through the AI model comprises verifying, by an AI server, the normal or abnormal web content through the AI model and then transmitting results to a web database to store decision results.
